# EUROPÄISCHE PATENTSCHRIFT

(11) **EP 3 091 125 B1**
(45) Veröffentlichungstag und Bekanntmachung des Hinweises auf die Patenterteilung: **12.07.2017**
(21) Anmeldenummer: 15166629.4
(22) Anmeldetag: 06.05.2015
(51) Int. Cl.: E01C 19/48

(54) **BAUMASCHINE MIT EINER HEBEVORRICHTUNG FÜR EINEN BESCHICKUNGSVORGANG UND VERFAHREN ZUM VERSTELLEN EINER HECKKLAPPE**
CONSTRUCTION MACHINE WITH A LIFTING DEVICE FOR A FEEDING PROCESS AND METHOD OF ADJUSTING A TAILGATE
ENGIN ÉQUIPÉ D'UN DISPOSITIF DE LEVAGE POUR UN PROCESSUS DE CHARGEMENT ET PROCÉDÉ DE RÉGLAGE D'UN HAYON

(43) Veröffentlichungstag der Anmeldung: 09.11.2016
(73) Patentinhaber: Joseph Vögele AG, 67075 Ludwigshafen (DE)
(72) Erfinder: FICKEISEN, Steffen, 67098 Bad Dürkheim (DE); ELSER, Tobias, 74821 Mosbach (DE)
(74) Vertreter: Grünecker Patent- und Rechtsanwälte PartG mbB

(56) Entgegenhaltungen:
- US-A1- 2010 326 067

## Beschreibung

Die Erfindung bezieht sich auf eine selbstfahrende Baumaschine mit einem Gutbunker, der eine Hebevorrichtung gemäß dem Anspruch 1 umfasst. Weiterhin betrifft die Erfindung ein Verfahren zum Verstellen einer beweglichen Heckklappe eines LKWs gemäß dem unabhängigen Verfahrensanspruch 12. Eine derartige Maschine ist aus US2010/0326067A1 benannt. Es ist bekannt, dass bei einem Beschickungsprozess ein Materiallieferfahrzeug, beispielsweise ein LKW, rückwärts an einen Gutbunker eines Straßenfertigers oder Beschickers heranfährt, und gegebenenfalls an einer Andockvorrichtung des Straßenfertigers oder Beschickers zumindest temporär während des Beschickungsvorganges andockt. Eine dafür vorgesehene Andockvorrichtung liegt beispielsweise durch das PaveDock-System der Anmelderin vor, welches insbesondere im Rahmen der europäischen Patentanmeldung Nr. 14164376.7 beschrieben wird, dessen Offenbarung hiermit durch Bezugnahme eingeschlossen ist.

Zum Befüllen des Gutbunkers des Straßenfertigers oder Beschickers wird das Materiallieferfahrzeug, beispielsweise der LKW, rückwärts derartig an den Gutbunker herangefahren, dass ein hinterer Teil der Ladefläche des Materiallieferfahrzeugs zumindest teilweise in einen Ladebereich des Gutbunkers hineinragt, so dass beim Kippen der Ladefläche das Einbaumaterial von der Ladefläche in den Gutbunker hineinrutscht.

Herkömmlicherweise umfasst die Ladefläche des Materiallieferfahrzeugs eine Heckklappe, die während des Materialübergabeprozesses an den Gutbunker geöffnet wird, wenn das Materiallieferfahrzeug die Ladefläche kippt. Beim Anheben der Ladefläche des Materiallieferfahrzeugs bleibt die Heckklappe in einer Schwerkraftlage im Wesentlichen senkrecht zum Boden hin ausgerichtet, wobei sie gegebenenfalls zusätzlich durch das von der Ladefläche herunterrutschende Einbaumaterial nach hinten aufgedrückt wird.

Problematisch ist, dass die Heckklappe des LKWs während der Materialübergabe weit in einen Ladebereich des Gutbunkers des Straßenfertigers oder Beschickers hineinragt und gegebenenfalls mit Gutbunkerwänden oder mit Einbauten im Gutbunker, beispielsweise Förderschnecken, kollidiert.

Außerdem kann es sein, dass durch die nach unten hängende Heckklappe bei der Materialübergabe an den Gutbunker des Straßenfertigers oder Beschickers eine gleichmäßige Materialverteilung verhindert wird, weil daran das von der Ladefläche herabrutschende Einbaumaterial anstößt und dann vorwiegend in einen vorderen Bereich des Gutbunkers geleitet wird Dies führt zu einer ungleichmäßigen Befüllung des Gutbunkers, wodurch zusätzlicher Arbeitsaufwand entstehen kann oder es sogar zu Unterbrechungen des Einbaus kommen kann.

Die Aufgabe der Erfindung ist es, eine Baumaschine mit einem Gutbunker zu schaffen, welcher bei einem Materialübergabevorgang durch den Einsatz einfacher, technischer Mittel verhindert, dass Teile der Ladefläche des Materiallieferfahrzeugs mit dem Gutbunker, insbesondere mit darin vorgesehenen Einbauten, kollidieren. Ferner ist es die Aufgabe der Erfindung, eine gleichmäßige Materialbefüllung des Gutbunkers zu ermöglichen. Außerdem ist es die Aufgabe, hierfür ein geeignetes Verfahren zur Verfügung zu stellen.

Diese Aufgabe wird gelöst durch eine Baumaschine mit den Merkmalen des Anspruchs 1. Weiter wird diese Aufgabe gelöst durch ein Verfahren gemäß dem unabhängigen Verfahrensanspruch 12. Vorteilhafte Weiterbildungen der Erfindung sind in den Unteransprüchen angegeben.

Gegenstand der Erfindung ist eine selbstfahrende Baumaschine mit einem Gutbunker zur Aufnahme von zu verbauendem Einbaumaterial, wobei die Baumaschine ein Straßenfertiger oder ein Beschicker ist. Erfindungsgemäß umfasst der Gutbunker mindestens eine Hebevorrichtung, die mit einer beweglichen Heckklappe eines den Gutbunker mit dem Einbaumaterial beliefernden LKWs in einen lösbaren Eingriff bringbar ist und die dazu konfiguriert ist, die bewegliche Heckklappe des LKWs zwischen einer ersten Position und einer zweiten Position zu verlagern.

Die Hebevorrichtung des Gutbunkers kann dadurch verhindern, dass die Heckklappe des den Gutbunker mit dem Einbaumaterial beliefernden LKWs mit dem Gutbunker, insbesondere mit dessen Seitenwänden und/oder mit im Gutbunker vorgesehenen Einbauten, beispielsweise mit Querförderschnecken, kollidiert.

Indem die Hebevorrichtung direkt am Gutbunker des Straßenfertigers oder Beschickers vorgesehen ist sowie dazu ausgebildet ist, jede beliebige Heckklappe eines LKWs lösbar zu ergreifen, kann die Hebevorrichtung zum Anheben der Heckklappe bei unterschiedlichen LKWs zum Einsatz kommen. Folglich ist der erfindungsgemäße Straßenfertiger oder Beschicker flexibel an einer Vielzahl von Materiallieferfahrzeugen einsetzbar, ohne auf einen bestimmten Typen von Materiallieferfahrzeug beschränkt zu sein.

Bisher hing die Heckklappe beim Materialübergabevorgang regelrecht frei, vor allem aber unkontrolliert in den Ladebereich des Gutbunkers des Straßenfertigers oder Beschickers hinein, wobei es nicht selten vorkam, dass die Heckklappe durch das von der Ladefläche des Materiallieferfahrzeugs herunterrutschende Einbaumaterial nach hinten ausschlug und gegen den Gutbunker und insbesondere darin vorgesehene Einbauten stieß, wodurch kostspielige Beschädigungen am Gutbunker entstanden. Eine solche Beschädigung kann durch die Erfindung vermieden werden, weil die Heckklappe des LKWs mittels der Hebevorrichtung der Erfindung im Zuge einer kontrollierten Bewegung zwischen einer ersten Position, in welcher sie noch wesentlich in den Ladebereich des Gutbunkers hineinragt, und einer zweiten Position, in welcher sie wesentlich aus dem Ladebereich des Gutbunkers herausbewegt ist, verlagerbar ist. Eine Kollision der Heckklappe mit dem Gutbunker, insbesondere mit dessen Seitenwänden und/oder den darin vorgesehenen Einbauten, ist dadurch nicht mehr möglich.

Vorzugsweise umfasst die Hebevorrichtung einen Linearantrieb, der dazu ausgebildet ist, die Hebevorrichtung mit der beweglichen Heckklage des LKWs in Eingriff zu bringen sowie die Hebevorrichtung von der beweglichen Heckklappe zu lösen. Mit Linearantrieb ist ein Antriebssystem gemeint, welches zu einer translatorischen Bewegung führt. Insbesondere ermöglicht der Linearantrieb eine Bewegung des weiter unten beschriebenen Teleskoparms der Hebevorrichtung in gerader Linie. Der Linearantrieb kann auf platzsparende Art und Weise zusammen mit anderen Komponenten der Hebevorrichtung am Gutbunker befestigt werden. Beispielsweise umfasst der Linearantrieb einen Hydraulikzylinder, einen Pneumatikzylinder, einen elektrischen Linearantrieb, einen mechanischen Linearantrieb und/oder einen elektromechanischen Linearantrieb. Solche Komponenten sind robust und einfach bedienbar und lassen sich gut am Gutbunker des Straßenfertigers oder Beschickers befestigen.

In einer vorteilhaften Ausführungsvariante der Erfindung weist die Hebevorrichtung einen Schwenkantrieb auf, der dazu ausgebildet ist, die bewegliche Heckklappe des LKWs zwischen der ersten Position und der zweiten Position zu schwenken. Beispielsweise umfasst der Schwenkantrieb einen Elektromotor, der eine Antriebswelle umfasst, an welcher der weiter unten beschriebene Schwenkarm der Hebevorrichtung befestigt ist. Anhand des Schwenkantriebs kann die erfindungsgemäße Hebevorrichtung auf kontrollierte Art und Weise die Heckklappe des LKWs zwischen der ersten Position und der zweiten Position führen, so dass ein unkontrolliertes Ausschlagen der Heckklappe vermieden werden kann.

Besonders vorteilhaft ist es, wenn die Hebevorrichtung zum Ergreifen und/oder zum Verlagern der Heckklappe des LKWs elektrisch, hydraulisch, pneumatisch und/oder mechanisch betreibbar ist. Es ist möglich, dass die Hebevorrichtung, insbesondere der dazugehörige Linear- und/oder Schwenkantrieb, an ein elektrisches, hydraulisches und/oder mechanisches Antriebssystem des Straßenfertigers oder Beschickers angeschlossen ist, welches beispielsweise über den Gutbunker mit der Hebevorrichtung verbunden ist. Indem die Hebevorrichtung mit bereits am Straßenfertiger oder Beschicker vorgesehenen elektrischen, hydraulischen und/oder mechanischen Einbauten funktional verbunden ist, baut die Hebevorrichtung mit geringem Volumen, so dass sie selbst wenig Platz am Gutbunker in Anspruch nimmt. Außerdem können dadurch Herstellungskosten eingespart werden. Alternativ dazu kann die Hebevorrichtung der Erfindung zumindest teilweise autark ausgebildet sein, d.h. dass elektrische, hydraulische und/oder mechanische Komponenten zum Durchführen einer oder mehrerer Bewegungen der Hebevorrichtung, insbesondere zum Ergreifen und/oder zum Verlagern der Heckklappe des LKWs, zumindest teilweise von der Hebevorrichtung enthalten sind. Somit ließe sich die Hebevorrichtung problemlos an einem Gutbunker eines Straßenfertigers oder Beschickers nachrüsten.

Vorzugsweise ist die Hebevorrichtung automatisch und/oder manuell ansteuerbar. Mit einer automatischen Ansteuerung ist gemeint, dass die Hebevorrichtung auch ohne aktives Einschreiten eines Bedieners des Straßenfertigers oder Beschickers die Heckklappe des LKWs erfasst und diese zwischen der ersten und der zweiten Position bewegt. Für diesen Einsatz ist es vorstellbar, dass die Hebevorrichtung und/oder der Straßenfertiger oder Beschicker eine Erfassungseinheit aufweist, die dazu konfiguriert ist, die Heckklappe des LKWs, wenn sich diese in der ersten Position befindet, zu detektieren, worauf basierend die Hebevorrichtung in eine Eingriffsposition an die Heckklappe des LKWs heranfährt und diese dann aus der ersten Position in die zweite Position verlagert. Vorzugsweise könnte ein Zurückschwenken der Heckklappe mittels der Hebevorrichtung dann automatisch durchführbar sein, wenn die Erfassungseinheit detektiert, dass die Ladefläche des LKWs zurückkippt.

Das Verstellen der Hebevorrichtung in die Eingriffsposition, um die Heckklappe des LKWs in der ersten Position zu ergreifen, kann jedoch auch mit einem anderen System des Straßenfertigers oder Beschickers funktional gekoppelt sein. Beispielsweise könnte die Hebevorrichtung dazu konfiguriert sein, funktional mit dem zu Beginn im Zusammenhang mit dem Stand der Technik erwähnten PaveDock-System verbunden zu sein. Dabei könnte die Hebevorrichtung von dem PaveDock-System ein Aktvierungssignal empfangen, welches angibt, dass der LKW am PaveDock-System des Straßenfertigers oder Beschickers angedockt hat, und dass die Heckklappe des LKWs derart in den Ladebereich des Gutbunkers hineinhängt, dass die Hebevorrichtung an der Heckklappe des LKWs andocken kann, um sie aus der ersten Position in die zweite Position zu heben. Das Aktivierungssignal kann dabei einen vorbestimmten Bewegungsablauf der Hebevorrichtung in Gang setzen, wodurch die Hebevorrichtung an einem Bereich der Heckklappe, insbesondere an einer Innenseite der Heckklappe, angreift und anschließend die Heckklappe aus der ersten Position in die zweite Position überführt. Ein solcher Bewegungsablauf ließe sich vornehmlich von einer Steuerung aus betreiben, die beispielsweise im Bedienpult der Baumaschine vorgesehen ist. Die automatisierte Variante kann bei sämtlichen Straßenfertiger- und Beschickermodellen vorteilhaft zum Einsatz kommen, insbesondere bei solchen, bei denen der Bediener vom Bedienstand des Straßenfertigers oder Beschickers aus eingeschränkte Sichtverhältnisse in den Gutbunker hat.

Unter manueller Ansteuerung der Hebevorrichtung ist gemeint, dass ein Bediener den oben im Zusammenhang mit der automatischen Ansteuerung beschriebenen Bewegungsablauf der Hebevorrichtung aktiv einleitet und durchführt, sobald die Heckklappe des LKWs entsprechend zur Hebevorrichtung in der ersten Position ausgerichtet ist. Dabei ist es vorstellbar, dass zur manuellen Ansteuerung der Hebevorrichtung an dieser selbst mindestens ein Bedienelement vorgesehen ist, welches ein Bediener, wenn er neben dem Gutbunker steht, aktivieren kann. Alternativ dazu oder zusätzlich wäre es jedoch auch möglich, auf dem Bedienstand, beispielsweise am Bedienpult des Straßenfertigers oder Beschickers, mindestens ein Bedienelement zur funktionalen Ansteuerung der Hebevorrichtung vorzusehen, womit ein Bediener des Straßenfertigers oder Beschickers vom Bedienstand aus die am Gutbunker vorgesehene Hebevorrichtung funktional ansteuern kann.

Bei einer anderen Variante gehört zu der Hebevorrichtung eine Fernsteuervorrichtung, welche ein Bediener mit sich führen kann. Beim Materialübergabevorgang kann sich der Bediener seitlich vor dem Gutbunker positionieren, um einen guten Einblick in den Ladebereich des Gutbunkers zu haben. Von dort aus kann er mittels der Fernsteuervorrichtung den Bewegungsablauf der Hebevorrichtung steuern sowie gegebenenfalls Signale an den LKW-Fahrer und/oder den Bediener des Straßenfertigers oder Beschickers geben.

Vorstellbar ist es auch, dass gemäß einer Variante der Erfindung ein Bewegungsablauf der Hebevorrichtung bezüglich der Heckklappe des LKWs durch eine Steuervorrichtung des Straßenfertigers oder Beschickers erlernbar ist. Die Steuervorrichtung kann insbesondere dazu ausgebildet sein, Halte- und Wendepunkte der Hebevorrichtung bezüglich der Heckklappe eines LKWs zu erlernen und diese als Bewegungsablauf für die Hebevorrichtung abzuspeichern und dann abzurufen, wenn der jeweilige LKW erneut zur Materialübergabe am Straßenfertiger oder Beschicker positioniert ist. Der Aufruf des Bewegungsablaufs kann dabei automatisch oder manuell eingeleitet werden.

Gemäß einer weiteren vorteilhaften Ausführungsform der Erfindung umfasst die Hebevorrichtung eine Lagereinheit, einen daran rotierbar befestigten Schwenkarm und einen Teleskoparm, welcher am Schwenkarm zwischen einer aus- und einer eingefahrenen Position verstellbar befestigt ist. Die Lagereinheit ist insbesondere dazu ausgebildet, an einer Seitenwand des Gutbunkers befestigt zu werden. Vorstellbar wäre es auch, dass die Lagereinheit den oben beschriebenen Linear- und/oder Schwenkantrieb umfasst und dazu ausgebildet ist, den an der Lagereinheit befestigten Schwenkarm zu schwenken und/oder den Teleskoparm linear zu verschieben.

Gemäß einer Ausführungsvariante kann die Lagereinheit weiterhin die oben im Zusammenhang mit der automatischen Ansteuerung der Hebevorrichtung beschriebene Erfassungseinheit tragen, wobei die Lagereinheit für die Erfassungseinheit eine stabile Basis bildet. Besonders stabil kann die Hebevorrichtung an einer Seitenwand des Gutbunkers befestigt werden, wenn Teile der Lagereinheit innen und außen an der Seitenwand des Gutbunkers montiert sind.

Der Schwenkarm und der Teleskoparm bilden vorzugsweise zumindest teilweise den oben beschriebenen Linearantrieb, wobei der Teleskoparm vorzugsweise in einem Rohrabschnitt des Schwenkarms verschiebbar gelagert ist. Der Teleskoparm kann dabei in den Rohrabschnitt des Schwenkarms hinein oder aus diesem herausfahren, um hinsichtlich der Heckklappe des LKWs in Position gebracht zu werden, d.h. an der Heckklappe des LKWs anzudocken oder sich von der Heckklappe des LKWs zu lösen.

Damit der Teleskoparm kraftschlüssig an der Heckklappe des LKWs angreifen kann, ist vorzugsweise an einem ausfahrbaren Ende des Teleskoparms ein Halteelement vorgesehen, welches an der Heckklappe des LKWs ankoppeln kann. Das Halteelement kann beispielsweise ein nach innen in den Ladebereich des Gutbunkers vom Teleskoparm abstehender Hebelarm sein, der beim Einfahren des Teleskoparms in den Schwenkarm hinein an einer Innenseite der Heckklappe ankoppelbar ist.

Besonders gut lässt sich die Hebevorrichtung an einer oberen Kante einer Seitenwand des Gutbunkers befestigen. An dieser Stelle ist die Hebevorrichtung leicht erreichbar und kann, ohne die anderen Einbauten im Gutbunker zu stören, platzsparend am Gutbunker befestigt sein. Außerdem lässt sich von dieser Stelle aus hervorragend die in den Ladebereich des Gutbunkers hineinhängende Heckklappe des LKWs ergreifen und von dort aus in die zweite Position bringen. Durch die Befestigung der Hebevorrichtung an der oberen Kante der Seitenwand können Verstellwege, welche die Hebevorrichtung zum Bewegen der Heckklappe des LKWs durchführt, reduziert werden.

Weiterhin wäre es vorteilhaft, wenn an beiden Seitenwänden des Gutbunkers jeweils eine Hebevorrichtung befestigt ist. Diese können vorzugsweise synchron zueinander bewegt werden, so dass sie gleichzeitig mit der Heckklappe des LKWs in Eingriff geraten, synchron diese aus der ersten Position heraus in die zweite Position heben, sowie ein synchrones Herablassen der Heckklappe aus der zweiten Position zurück in die erste Position ermöglichen. Der Einsatz von zwei Hebevorrichtungen am Gutbunker ist vor allem dann sinnvoll, wenn die anzuhebende Heckklappe ein hohes Gewicht hat, wovon meistens auszugehen ist.

Bevorzugterweise ist die Hebevorrichtung lösbar, beispielsweise angeschraubt, am Gutbunker befestigt. Somit lässt sich diese, insbesondere für Instandhaltungszwecke, problemlos vom Gutbunker entfernen. Ebenso gut könnte sie damit auf leichte Art und Weise an einem Gutbunker eines Straßenfertigers oder Beschickers nachgerüstet werden.

Besonders vorteilhaft ist es, wenn die Hebevorrichtung dazu konfiguriert ist, die Heckklappe außerhalb eines Ladebereichs des Gutbunkers zu heben, wenn die Heckklappe in der zweiten Position ist. Dies ist insbesondere dann möglich, wenn der Schwenkantrieb der Hebevorrichtung derart betreibbar ist, dass er den Schwenkarm der Hebevorrichtung bis in einen Bereich zwischen 90° und 160° zur Ausgangslage beabstandet ausschwenken kann. Damit wird erreicht, dass die Heckklappe mittels der Hebevorrichtung oberhalb und außerhalb des Gutbunkers in der zweiten Position derart positionierbar ist, dass sie nicht mehr in den Ladebereich, d.h. in den Bereich, in welchem der Gutbunker das Einbaumaterial aufnimmt, hineinhängt. Eine Kollision mit dem Gutbunker ist dort nicht mehr möglich.

Die Erfindung betrifft auch ein Verfahren zum Verstellen einer beweglichen Heckklappe eines LKWs, der zur Übergabe von Einbaumaterial an einem Gutbunker eines Straßenfertigers oder Beschickers positioniert ist. Erfindungsgemäß dockt eine Hebevorrichtung, welche am Gutbunker des Straßenfertigers oder Beschickers vorgesehen ist, an der Heckklappe des LKWs an, wenn sich die Heckklappe in einer ersten Position befindet. In der ersten Position hängt die Heckklappe mindestens teilweise in einen Ladebereich des Gutbunkers hinein, wobei sie durch ein Hochkippen der Ladefläche des LKWs noch weiter in den Ladebereich des Gutbunkers hineinbewegt werden könnte, wodurch gegebenenfalls eine Kollision mit anderen im Gutbunker vorgesehenen Einbauten geschehen könnte.

Erfindungsgemäß wird daher die Heckklappe durch die Hebevorrichtung aus der ersten Position in eine zweite Position bewegt, in welcher die Heckklappe zumindest teilweise aus dem Ladebereich des Gutbunkers herausbewegt ist, und wobei die Hebevorrichtung die Heckklappe temporär in der zweiten Position hält. In der zweiten Position wird die Heckklappe des LKWs derart von der Hebevorrichtung gehalten, dass sie nicht mehr mit dem Gutbunker, insbesondere mit darin vorgesehenen Einbauten, kollidieren kann. Vorzugsweise verbleibt die Heckklappe des LKWs in der zweiten Position solange, bis der Gutbunker des Straßenfertigers oder Beschickers vollständig befüllt ist.

Vorzugsweise führt die Hebevorrichtung die Heckklappe von der zweiten Position zurück in die erste Position. Dies geschieht vornehmlich gleichzeitig zu einem Einkippen der Ladefläche des LKWs, so dass die Heckklappe keinesfalls mit dem Gutbunker bzw. darin vorgesehenen Einbauten kollidiert. Während des Bewegungsablaufs der Hebevorrichtung, um die Heckklappe sicher aus der ersten Position in die zweite Position und wieder zurückzubringen, führt die Heckklappe des LKWs eine kontrollierte Bewegung durch, welche durch die Hebevorrichtung ermöglicht wird. Ein Ausschlagen der Heckklappe des LKWs gegen den Gutbunker kann damit verhindert werden.

Vorzugsweise wird die Hebevorrichtung von der Hecklappe des LKWs gelöst, indem der LKW am Ende des Beschickungsvorganges kurz die Ladefläche in einer leicht gekippten Position hält, bei welcher die Heckklappe vorzugsweise die erste Position einnimmt. Die Hebevorrichtung kann dann problemlos von der Innenseite der Heckklappe wegbewegt werden, sodass sie nicht mehr an der Heckklappe anliegt.

Vorzugsweise wird die Hebevorrichtung zum Andocken an der Heckklappe des LKWs mittels eines Linearantriebs verstellt. Dieser kann wie oben beschrieben ausgeführt sein. Gemäß einer weiteren Ausführungsvariante der Erfindung wird die Hebevorrichtung zum Bewegen der Heckklappe zwischen der ersten und der zweiten Position mittels eines Schwenkarms verstellt, der wie oben beschrieben ausgeführt sein kann.

Weiter ist es möglich, dass der Bewegungsablauf der Hebevorrichtung, um die Heckklappe sicher aus der ersten Position in die zweite Position und wieder zurückzubringen, durch eine Steuervorrichtung des Straßenfertigers oder Beschickers erlernt, d.h. abgespeichert werden kann, und bei einer erneuten Materialübergabe, insbesondere durch denselben LKW-Typ, abgerufen werden kann. Der Bewegungsablauf kann entweder automatisch oder manuell aufgerufen werden. Insbesondere kann der Bewegungsablauf mittels Tastendruck manuell am Bedienstand des Straßenfertigers oder Beschickers aufgerufen werden. Vorstellbar ist es auch, dass der Bewegungsablauf an einem Bohlenbedienstand des Straßenfertigers aufgerufen werden kann. Weiter vorstellbar ist es, dass der Bewegungsablauf durch einen Andockvorgang des LKWs am Straßenfertiger oder Beschicker automatisch aufgerufen wird.

Im Folgenden werden vorteilhafte Ausführungsbeispiele der Erfindung anhand der nachfolgenden Zeichnungen näher dargestellt. Im Einzelnen zeigen:
- Fig. 1: eine Seitenansicht eines Straßenfertigers gemäß der Erfindung,
- Fig. 2: eine perspektivische Darstellung des erfindungsgemäßen Straßenfertigers,
- Fig. 3: eine perspektivische Darstellung eines erfindungsgemäßen Beschickers,
- Fig. 4: einen Beschickungsvorgang, bei welchem Einbaumaterial von der Ladefläche eines LKWs in den Gutbunker eines erfindungsgemäßen Straßenfertigers oder Beschickers gekippt wird,
- Fig. 5: eine erfindungsgemäße Gutbunkeranordnung mit einer Hebevorrichtung im ausgefahrenen Zustand,
- Fig. 6: eine erfindungsgemäße Gutbunkeranordnung mit einer Hebevorrichtung in einem eingefahrenen Zustand,
- Fig. 7: eine Seitenansicht der erfindungsgemäßen Gutbunkeranordnung mit der Hebevorrichtung,
- Fig. 8: eine Seiteninnenansicht der erfindungsgemäßen Gutbunkeranordnung mit der Hebevorrichtung in einer ersten Schwenkposition,
- Fig. 9: eine Seiteninnenansicht der erfindungsgemäßen Gutbunkeranordnung mit der Hebevorrichtung in einer zweiten Schwenkposition,
- Fig. 10: eine Seiteninnenansicht der erfindungsgemäßen Gutbunkeranordnung mit der Hebevorrichtung beim Zurückkehren in die Ausgangslage,
- Fig. 11A: ein Bewegungsablaufschema der bei der Erfindung eingesetzten Hebevorrichtung, und
- Fig. 11 B: eine Fortsetzung des in der Fig. 11A gezeigten Bewegungsablaufschemas der Erfindung.

Gleiche Komponenten sind in den Figuren durchgängig mit gleichen Bezugszeichen versehen.

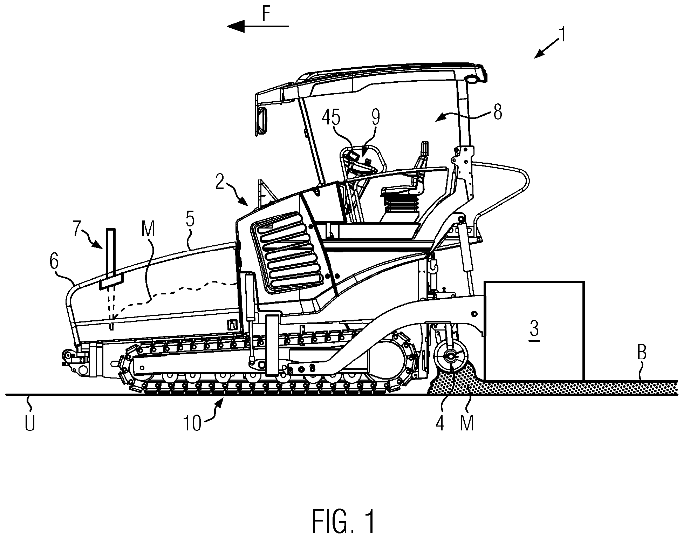

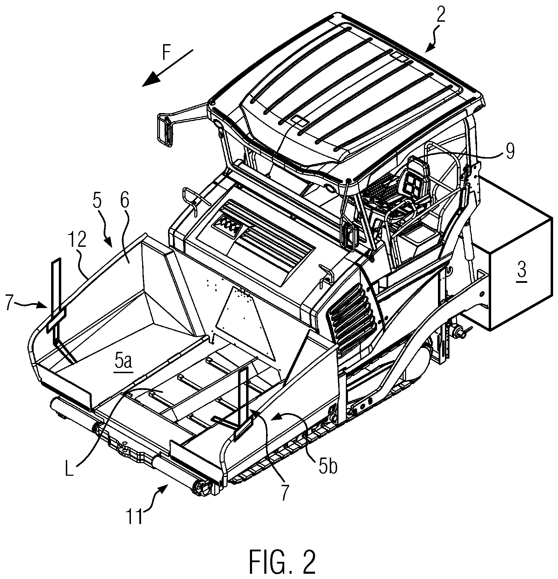

Fig. 1 zeigt eine Seitenansicht einer selbstfahrenden Baumaschine 1, bei welcher es sich in diesem Ausführungsbeispiel um einen Straßenfertiger 2 handelt. Der Straßenfertiger 2 bewegt sich in Einbaurichtung F auf einem Untergrund U fort. Der Straßenfertiger 2 umfasst eine Einbaubohle 3, die auf dem Untergrund U eine neue Belagschicht B aufträgt. Vor der Einbaubohle umfasst der Straßenfertiger 2 eine Verteilerschnecke 4, die in Fahrtrichtung F gesehen vor der Einbaubohle 3 Einbaumaterial M verteilt. Ferner umfasst der Straßenfertiger 2 einen Gutbunker 5, der in Fahrtrichtung F gesehen vorne am Straßenfertiger 2 vorgesehen ist und zur Aufnahme des Einbaumaterials M ausgebildet ist. Vom Gutbunker aus wird das Einbaumaterial M über eine in Fig. 1 nicht gezeigte Längsfördereinrichtung L (siehe Fig. 2) nach hinten zur Verteilerschnecke 4 transportiert, von welcher es dann vor der Einbaubohle 3 ausgebreitet wird.

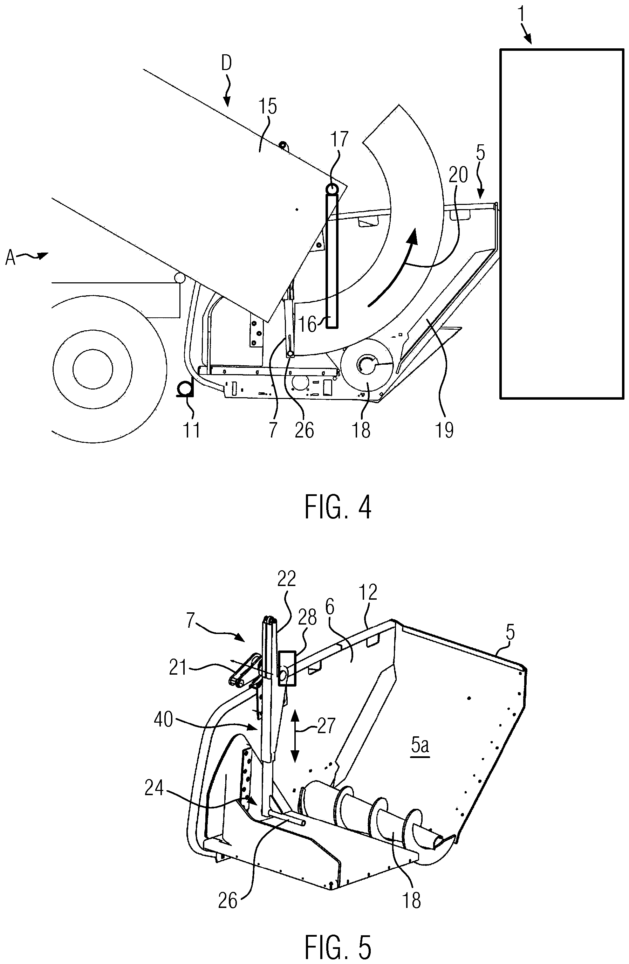

Auf einer Seitenwand 6 des Gutbunkers 5 ist eine Hebevorrichtung 7 befestigt. Die Hebevorrichtung 7 wird gemäß der Erfindung für einen Materialübergabevorgang benutzt, welcher später insbesondere im Zusammenhang mit den Fig. 4 bis 10 beschrieben werden wird.

Ferner umfasst der Straßenfertiger 2 einen Bedienstand 8, von welchem aus ein Bediener mittels eines am Bedienstand 8 vorgesehenen Bedienpults 9 eine Vielzahl von Funktionen des Straßenfertigers 2 steuern kann. Insbesondere kann der Bediener über das Bedienmodul 9 Funktionen des Gutbunkers 5 sowie der daran angebrachten Hebevorrichtung 7 steuern. Das Bedienmodul 9 enthält eine Steuervorrichtung 45, die insbesondere an einen Betrieb der Hebevorrichtung 7 funktional gekoppelt ist. Die Steuervorrichtung 45 ist insbesondere dazu ausgebildet, einen Bewegungsablauf der Hebevorrichtung 7 zu koordinieren und gegebenenfalls abzuspeichern.

Der in Fig. 1 gezeigte Straßenfertiger 2 umfasst einen Raupenkettenantrieb 10, wobei der Straßenfertiger 2 auch als Radfertiger ausgebildet sein kann, ohne dadurch von der vorliegenden erfinderischen Idee abzuweichen.

Fig. 2 zeigt den in Fig. 1 dargestellten Straßenfertiger 2 in einer Perspektivdarstellung, wodurch man einen guten Einblick in den Gutbunker 5 des Straßenfertigers 2 erhält. Der Gutbunker 5 umfasst zwei vorzugsweise kippbare Gutbunkerhälften 5a, 5b. Zwischen den Gutbunkerhälften 5a, 5b verläuft die Längsfördervorrichtung L. Indem die Gutbunkerhälften 5a, 5b nach innen in Richtung zur Längsfördervorrichtung L gekippt werden, kann Einbaumaterial M aus den Gutbunkerhälften 5a, 5b in Richtung Längsfördervorrichtung L gefördert werden. Die Längsfördervorrichtung L führt das darauf befindliche Einbaumaterial M nach hinten unter den Bedienstand 8 hindurch zur Einbaubohle 3.

Weiter zeigt Fig. 2 eine Schubvorrichtung 11, welche in Fahrtrichtung F gesehen unterhalb und vor dem Gutbunker 5 am Straßenfertiger 2 befestigt ist. Die Schubvorrichtung 11 dient dazu, gegen hintere Reifen eines LKWs A (siehe Fig. 4) anzudocken, wenn dieser rückwärts für einen Materialübergabevorgang an den Gutbunker 5 des Straßenfertigers 2 heranfährt. Die Schubvorrichtung 11 kann dazu ausgebildet sein, den LKW A zumindest temporär während des Materialübergabevorgangs vor dem Straßenfertiger 2 mit gleichbleibendem Abstand zum Gutbunker 5 herzuschieben.

In Fig. 2 ist auch zu sehen, dass an beiden Gutbunkerhälften 5a, 5b jeweils eine Hebevorrichtung 7 befestigt ist. Beide Hebevorrichtungen 7 sind in einem vorderen Bereich des Gutbunkers 5 an einer oberen Kante 12 der jeweiligen Seitenwände 6 der Gutbunkerhälften 5a, 5b befestigt. Weitere Details der Hebevorrichtung 7 werden im Zusammenhang mit den Fig. 5 bis 9 erläutert.

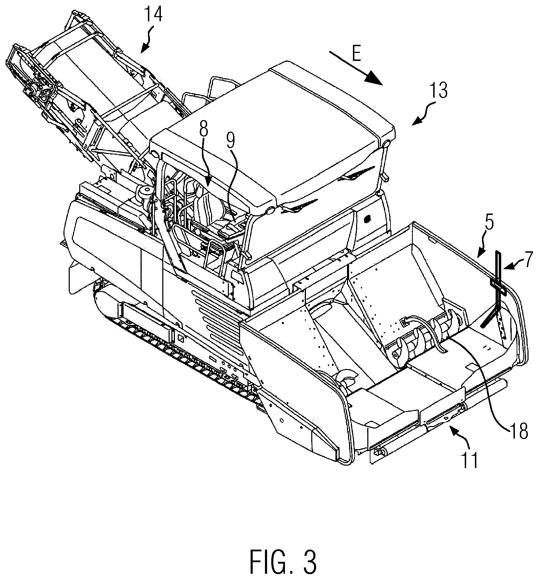

In Fig. 3 handelt es sich bei der selbstfahrenden Baumaschine 1 um einen Beschicker 13 für einen Straßenfertiger. Der Beschicker 13 umfasst eine Materialtransportvorrichtung 14, welche vom Gutbunker 5 des Beschickers 13 aus mit Einbaumaterial M versorgt wird. Die Materialtransportvorrichtung 14 ist dazu konfiguriert, einem hinter dem Beschicker 13 fahrenden Straßenfertiger 2 gemäß Fig. 1 Einbaumaterial M in dessen Gutbunker 5 zu fördern. Bei einer solchen Anwendung bilden der Straßenfertiger 2 sowie der diesem vorausfahrende Beschicker 13 ein Einbausystem, bei welchem dem Straßenfertiger 2 ununterbrochen Einbaumaterial M vom Beschicker 13 zur Verfügung steht.

Im Gutbunker 5 des Beschickers 13 ist eine Querförderschnecke 18 quer zur Fahrtrichtung E am Boden des Gutbunkers 5 vorgesehen. Die Querförderschnecke 18 kann in jeder der beiden Gutbunkerhälften 5a, 5b vorgesehen sein, unabhängig davon, ob der Gutbunker 5 zum Straßenfertiger 2 oder zum Beschicker 13 gehört. Die Querförderschnecke 18 wird im Gutbunker 5 verwendet, um das Einbaumaterial M in Richtung der in Fig. 2 gezeigten Längsfördervorrichtung L zu bewegen, damit das Einbaumaterial M kontinuierlich aus dem Gutbunker 5 heraus transportiert werden kann. Weiter zeigt Fig. 3, dass der Beschicker 13 wie der Straßenfertiger 2 aus den Fig. 1 und 2 mit einer Schubvorrichtung 11 ausgestattet ist, welche das Andocken eines LKWs daran bei einem Materialübergabevorgang ermöglicht.

Obwohl der Gutbunker 5 des Beschickers 13 in Fig. 3 lediglich an einer der Gutbunkerhälften 5a, 5b eine Hebevorrichtung 7 befestigt hat, könnte genauso gut eine zweite Hebevorrichtung 7 an der anderen Gutbunkerhälfte 5a, 5b befestigt sein.

Fig. 4 zeigt ein Materialversorgungsfahrzeug D, bei welchem es sich in dieser Ausführungsvariante um einen LKW A handelt. Der LKW A versorgt den Straßenfertiger 2 aus Fig. 1 oder den Beschicker 13 aus Fig. 3 mit Einbaumaterial M auf der Baustelle. Für einen Materialübergabevorgang ist der LKW A vor dem Gutbunker 5 des Straßenfertigers 2 oder des Beschickers 13 positioniert. In der Fig. 4 hat der LKW mit seinen hinteren Reifen an der Schubvorrichtung 11 der Baumaschine 1 angedockt. Der LKW A hat eine Ladefläche 15, welche zum Befüllen des Gutbunkers 5 mit Einbaumaterial M gekippt wird. Damit das Einbaumaterial M von der Ladefläche 15 in den Gutbunker 5 hineinfällt, wird eine Heckklappe 16 der Ladefläche 15 geöffnet. Die Heckklappe 16 ist um eine Drehachse 17 an der Ladefläche 15 des LKWs A drehbar gelagert. Die Heckklappe 16 neigt dazu, beim Kippen der Ladefläche 15 wegen der an ihr angreifenden Schwerkraft im Wesentlichen senkrecht zum Untergrund U ausgerichtet zu sein, und zwar unabhängig vom Kippwinkel der Ladefläche 15.

In der Fig. 4 ist die am Boden des Gutbunkers 5 vorgesehene Querförderschnecke 18 dazu konfiguriert, aus einer der Gutbunkerhälften 5a, 5b das Einbaumaterial M in Richtung zur Längsfördervorrichtung L zu fördern. Problematisch kann es werden, wenn das von der Ladefläche 15 des LKWs A herunterrutschende Einbaumaterial M gegen die Heckklappe 16 drückt, so dass diese nach hinten ausschlägt und dadurch gegebenenfalls gegen die Querförderschnecke 18 stößt. Durch eine derartige Kollision nimmt insbesondere die Querförderschnecke 18 aus dem Gutbunker 5 Schaden, wodurch hohe Reparaturkosten entstehen können. In der Fig. 4 ist gut zu sehen, dass die geöffnete Heckklappe 16 weit in einen Ladebereich 19 des Gutbunkers 5 hineinhängt und insbesondere dessen unteres Ende bis beinahe zum Boden des Gutbunkers 5 reicht. Dadurch besteht jedoch das Risiko, dass die Heckklappe gegen die jeweiligen Gutbunkerhälften 5a, 5b des Gutbunkers 5 stößt oder mit anderen darin vorgesehenen Einbauten, beispielsweise der zuvor beschriebenen Querförderschnecke 18 kollidiert. Um dies zu verhindern, ergreift die in Fig. 4 nur teilweise dargestellte Hebevorrichtung 7 die Heckklappe 16 und schwenkt diese aus dem Ladebereich 19 entlang einer Schwenkrichtung 20 heraus. Dieses Verfahren und weitere Details der Hebevorrichtung 7 werden anhand der folgenden Figuren erläutert.

In der Fig. 5 ist in Perspektivdarstellung eine der beiden Gutbunkerhälften 5a, 5b des Gutbunkers 5 dargestellt. Gemäß Fig. 5 ist die Hebevorrichtung 7 an der oberen Kante 12 der Seitenwand 6 der Gutbunkerhälfte 5a befestigt. Die Hebevorrichtung 7 umfasst eine Lagereinheit 21, die auf der oberen Kante 12 an vorderer Stelle der Seitenwand 6 befestigt ist. An der Lagereinheit 21 ist ein Schwenkarm 22 rotierbar befestigt. Die Lagereinheit 21 hält den Schwenkarm 22 innerhalb der Gutbunkerhälfte 5a, so dass der Schwenkarm 22 gegenüberliegend zu einer Innenseite der Seitenwand 6 hin rotierbar ausgerichtet ist.

Weiter umfasst die Hebevorrichtung 7 einen Teleskoparm 23, der am Schwenkarm 22 zwischen einer aus- und einer eingefahrenen Position 24, 25 verstellbar befestigt ist. Fig. 5 zeigt den Teleskoparm 23 in der ausgefahrenen Position 24.

An einem unteren Ende des Teleskoparms 23 ist ein Halteelement 26 zum Ankoppeln an der Heckklappe 16 des LKWs A vorgesehen. In der Fig. 5 ist das Halteelement 26 ein vom Teleskoparm 23 im Wesentlichen rechtwinklig nach innen zur Längsfördervorrichtung L hin abstehender Arm.

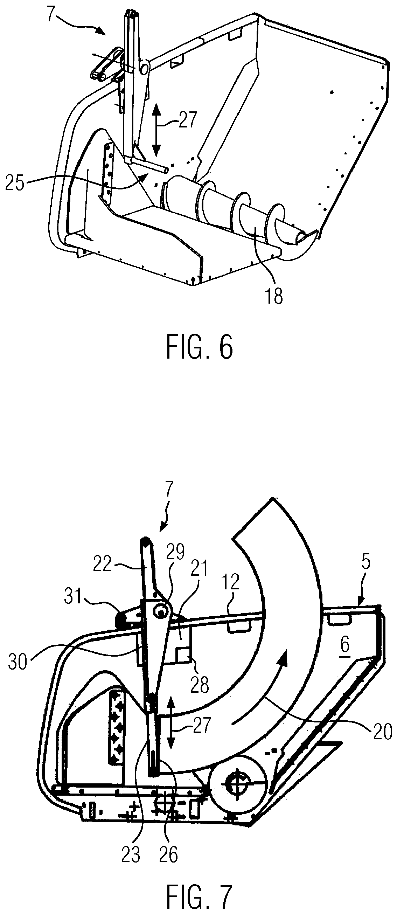

Bezug nehmend auf den Materialübergabevorgang aus Fig. 4 befindet sich die Heckklappe 16 für einen Materialübergabevorgang in Fahrt- oder Einbaurichtung E, F gesehen hinter der in Figur 5 gezeigten Hebevorrichtung 7 des Gutbunkers 5. Um mit einer Innenseite der Heckklappe 16 in Eingriff zu geraten, fährt der Teleskoparm 23 in linearer Richtung 27 aus der in Fig. 5 gezeigten ausgefahrenen Position 24 in die in Fig. 6 gezeigte eingefahrene Position 25. Damit wird erreicht, dass das Halteelement 26 nicht mehr, wie in Fig. 4 gezeigt, unterhalb der Heckklappe 16 positioniert ist, sondern zu einer Innenseite der Heckklappe 16 hin zugewandt ausgerichtet ist. In der eingefahrenen Position 25 gemäß Fig. 6 kann das Halteelement 26 in Fahrt- oder Einbaurichtung E, F gesehen vor der Innenseite der Heckklappe 16 ausgerichtet werden, wobei das Halteelement 26 bereits in der eingefahrenen Position 25 die Innenseite der Heckklappe 16 kontaktieren kann oder mit einem vorbestimmten Abstand zur Innenseite der Heckklappe 16 positioniert sein kann, sodass das Halteelement 26 erst dann die Innenseite der Heckklappe 16 kontaktiert, wenn der Schwenkarm 22 hochschwenkt.

Fig. 5 zeigt schematisch, dass die Hebevorrichtung 7 einen Linearantrieb 28 umfasst. Der Linearantrieb 28 ist dazu konfiguriert, den Teleskoparm 23 entlang der linearen Richtung 27 relativ zum Schwenkarm 22 zu bewegen. Der Linearantrieb 28 kann vom Bediener über das Bedienermodul 9 des Straßenfertigers 2 oder des Beschickers 13 aus angesteuert werden. Alternativ oder zusätzlich lässt sich der Linearantrieb 28 auch an der Hebevorrichtung 7 bedienen und/oder automatisch ansteuern.

In Fig. 7 ist der Gutbunker 5 in Seiteninnenansicht vergrößert dargestellt. Wie in den Fig. 5 und 6 ist die Lagereinheit 21 der Hebevorrichtung 7 auf einer oberen Kante 12 des Gutbunkers 5 befestigt. Der Teleskoparm 23 ist innerhalb des Schwenkarms 22 geführt, wobei der Schwenkarm 22 und der Teleskoparm 23 als verstellbare hydraulische oder pneumatische Kolbenzylinderanordnung ausgebildet sein kann. Wie im Zusammenhang mit den Fig. 5 und 6 erläutert wurde, kann der Teleskoparm 23 relativ zum Schwenkarm 22 entlang der linearen Richtung 27 zwischen den aus- und eingefahrenen Positionen 24, 25 durch Verwendung des Linearantriebs 28 verstellt werden. Der Schwenkarm 22 ist rotierbar an einer Rotationsachs 29 befestigt, um welche er geschwenkt wird, um die Heckklappe 16 des LKWs A aus dem Ladebereich 19 des Gutbunkers 5 herauszuheben.

Die Lagereinheit 21 umfasst eine innere sowie eine nicht gezeigte äußere Führungsplatte 30, welche an einer Innenseite bzw. an einer Außenseite der Seitenwand 6 ausgerichtet sind. Ferner umfasst die Lagereinheit 21 eine Rollenführung 31, die auf der oberen Kante 12 der Seitenwand 6 aufsitzt. Die jeweiligen Führungsplatten 30 sowie die Rollführung 31 erleichtern ein Verstellen der Hebevorrichtung 7 entlang der oberen Kante 12 der Seitenwand 6. Somit kann die Hebevorrichtung 7, welche vorzugsweise lösbar befestigt ist, beliebig entlang der oberen Kante 12 verschoben werden.

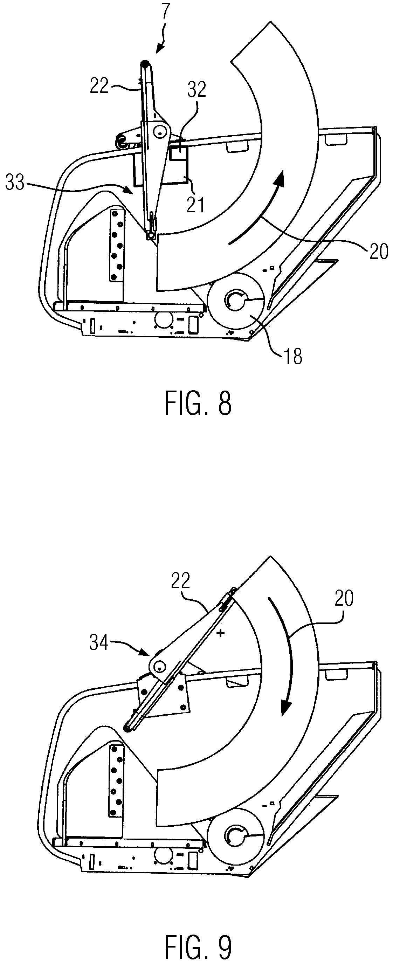

Fig. 8 zeigt, dass die Hebevorrichtung 7 einen schematisch dargestellten Schwenkantrieb 32 umfasst. Der Schwenkantrieb 32 ist dafür vorgesehen, den Schwenkarm 22 relativ zur Lagereinheit 21 entlang der Schwenkrichtung 20 zu schwenken. Die Schwenkvorrichtung 32 wird also dann gebraucht, wenn der Teleskoparm 23, insbesondere dessen Halteelement 26 an der Heckklappe 16 des LKWs A angedockt hat, um im Anschluss daran die Heckklappe 16 entlang der Schwenkrichtung 20 aus dem Ladebereich 19 des Gutbunkers herauszuheben, damit die Heckklappe 16 nicht mehr mit dem Gutbunker 5 sowie mit darin vorgesehenen Einbauten, beispielsweise der in Fig. 8 gezeigten Querförderschnecke 18, kollidieren kann.

In Fig. 8 ist der Schwenkarm 22 in einer ersten Schwenkposition 33 gezeigt. Aus dieser wird er in Fig. 8 entlang der Schwenkrichtung 20 in eine zweite Schwenkposition 34 geschwenkt, in welcher die Hebevorrichtung 7 die Heckklappe 16 des LKWs A (siehe Fig. 4) vorzugsweise komplett aus dem Ladebereich 19 des Gutbunkers 5 heraushebt. In der Fig. 9 befindet sich die Hebevorrichtung 7 in der zweiten Schwenkposition 34. In dieser ist der Schwenkarm 22 um ca. 135° entlang der Schwenkrichtung 20 versetzt zur ersten Schwenkposition 33 positioniert. Dadurch kann die am Teleskoparm 23 aufliegende Heckklappe 26 oberhalb des Gutbunkers 5 gehalten werden. Der Schwenkarm 22 wird vorzugsweise so lange in der zweiten Schwenkposition 34 gehalten, bis kein Einbaumaterial M mehr von der Ladeflächen 15 in den Gutbunker 5 fällt.

Mittels einer automatischen oder manuellen Ansteuerung des Schwenkantriebs 32 kann der Schwenkarm 22 aus der zweiten Schwenkposition 34 in die erste Schwenkposition 33 zurückbewegt werden. Dadurch wird die Heckklappe 16 kontrolliert zurück in ihre im Wesentlichen senkrechte Ausrichtung geführt. Dies kann zeitgleich zu einem Einkippen der Ladefläche 15 geschehen, wobei dies nicht zwingend notwendig ist.

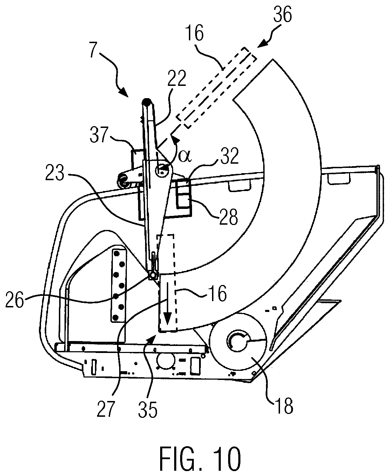

Fig. 10 zeigt die Hebevorrichtung 7, nachdem deren Schwenkarm 22 aus der zweiten Schwenkposition 33 mittels des Schwenkantriebs 32 wieder zurück in die erste Schwenkposition 33 versetzt wurde. Gestrichelt ist schematisch angedeutet, dass die Heckklappe 16 des LKWs A wieder ihre Ausgangsposition, nämlich die erste Position 35 einnimmt. In der ersten Position 35 ist die Heckklappe 16 im Wesentlichen senkrecht zum Untergrund U ausgerichtet. In der zuvor im Zusammenhang mit der Fig. 9 beschriebenen zweiten Schwenkposition 34, in welcher der Schwenkarm 22 entlang der Schwenkrichtung 20 nach außerhalb des Ladebereichs 19 geschwenkt ist, ist die Heckklappe 16 in der zweiten Position 36 gelagert. Zwischen der ersten und der zweiten Position 35, 36 durchläuft die Heckklappe 16 vorzugsweise einen Schwenkwinkel α bis zu 160°.

In Fig. 10 sieht man, dass das Halteelement 26 des Teleskoparms 23 noch an der Innenseite der Heckklappe 16 anliegt, so dass der in Fig. 4 gezeigte LKW A noch nicht wegfahren kann. Zur Freigabe der Heckklappe 16 wird mittels des Linearantriebs 28 der Teleskoparm 23 aus dem Schwenkarm 22 heraus zurück in die im Zusammenhang mit Fig. 5 beschriebene ausgefahrene Position 24 bewegt. In der ausgefahrenen Position 24 ist die Heckklappe 16 vollständig vom Teleskopfarm 23 entkoppelt, so dass der LKW A vor dem Straßenfertiger 2 bzw. dem Beschicker 13 wegfahren kann. Diesbezüglich könnte die Hebevorrichtung 7 mit einer in Fig. 10 schematisch angedeuteten Signalisierungseinheit 37 ausgestattet sein, die dazu ausgebildet ist, dem Bediener des Straßenfertigers 2 oder des Beschickers 13, insbesondere jedoch dem LKW-Fahrer ein Freigabesignal zu geben, welches entweder akustisch und/oder visuell anzeigt, dass der LKW A wegfahren kann.

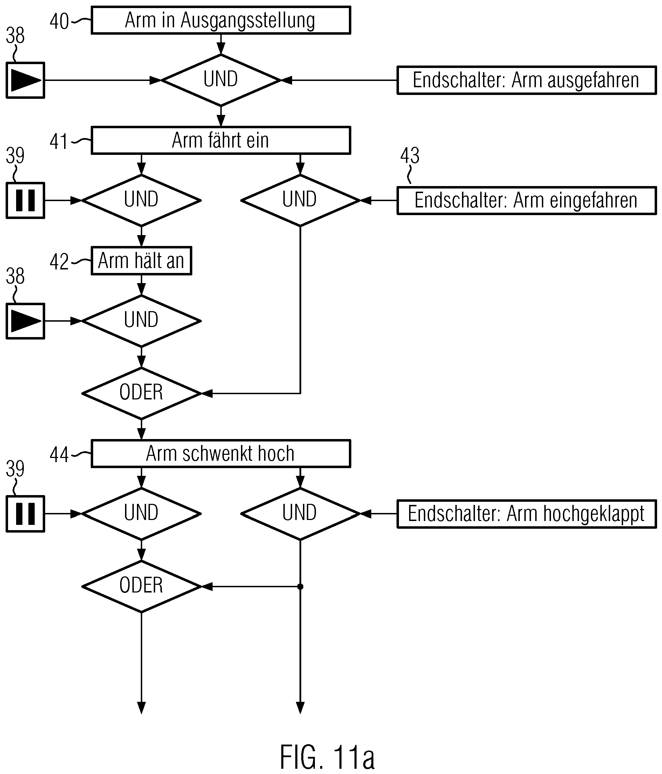

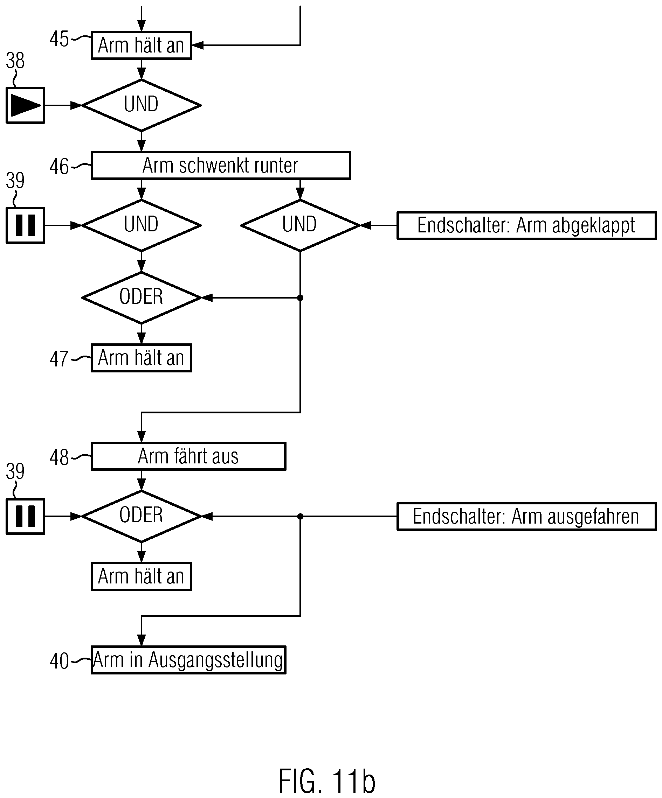

In den Fig. 11A und 11B ist ein Bewegungsablaufdiagramm für mindestens eine Hebevorrichtung 7 gezeigt. Der Bewegungsablauf der Hebevorrichtung 7 kann mittels einer Starttaste 38 und einer Stopptaste 39 durchgeführt werden. Dabei kann der Bewegungsablauf für die Hebevorrichtung 7 vorzugsweise wie folgt ablaufen, wobei einzelne Schritt oder auch mehrere Schritte entfallen können:
1. Zunächst befindet sich die Hebevorrichtung in einer Ausgangsstellung 40, in welcher der Schwenkarm 22 in der ersten Schwenkposition 33 und der Teleskoparm 23 in der ausgefahrenen Position 24 sind (siehe Fig. 5).
2. Wird die Starttaste 38 gedrückt und befindet sich der Teleskoparm 23 in der ausgefahrenen Position 24, dann fährt der Teleskoparm 23 in der linearen Richtung 27 in den Schwenkarm 22 ein (Schritt 41). Dies ist auch im Zusammenhang mit der Fig. 6 gezeigt.
3. Das Einfahren des Teleskoparms 23 kann unterwegs mittels der Stopptaste 39 unterbrochen werden. Der Teleskoparm 23 hält dann gemäß Schritt 42 an. Alternativ fährt der Teleskoparm 23 solange in den Schenkarm 22 ein, bis er darin eine Endposition erreicht hat.
4. Wird nach dem Anhalten des Teleskoparms 23 erneut die Starttaste 38 aktiviert, dann schwenkt der Schwenkarm 22 aus der ersten Schwenkposition 33 in der Schwenkrichtung 20 in die zweite Schwenkposition 34. Alternativ dazu schwenkt der Schwenkarm 22 ohne erneutes Drücken der Starttaste 38 automatisch in die zweite Schwenkposition 34, wenn detektiert wird (Schritt 43), dass der Teleskoparm 23 vollständig in der eingefahrenen Position 25 ist, wodurch er einen Endschalter betätigt, der automatisch den Schwenkantrieb 32 auslöst. In beiden Alternativen wird der Schwenkarm 22 in Richtung der zweiten Schwenkposition 34 hochgeschwenkt (Schritt 44).
5. Das Hochschwenken des Schwenkarms 22 entlang der Schwenkrichtung 20 kann (wie die lineare Verstellung des Teleskoparms 23 unter 3.) mittels der Stopptaste 39 unterbrochen werden, um die zu bewegende Heckklappe an eine beliebige Stelle zu heben. Alternativ dazu wird das Hochschwenken des Schwenkarms 22 automatisch gestoppt, wenn dieser in der zweiten Schwenkposition 34 ankommt. In beiden Alternativen hält der Schwenkarm 22 gemäß Schritt 45 an.
6. In der zwischengestoppten oder zweiten Schwenkposition 34 verbleibt der Schwenkarm 22 solange, bis ein Herabschwenken mittels der Starttaste 38 eingeleitet wird, wodurch der Schwenkarm 22 aus der zwischengestoppten oder zweiten Schwenkposition 34 zurück in die erste Schwenkposition 33 gemäß Schritt 46 schwenkt. Wie das Hochschwenken des Schwenkarms 22 kann auch das Herunterschwenken in Richtung der ersten Schwenkposition 33 mittels der Stopptaste 39 an beliebiger Stelle unterbrochen werden. Alternativ dazu wird das Herunterschwenken des Schwenkarms 22 automatisch dann gestoppt, wenn dieser sich wieder vollständig in der ersten Schwenkposition 33 befindet. Somit hält der Schwenkarm 22 entweder an einer gewünschten Position mittels Drücken der Stopptaste 39 oder eben in der ersten Schwenkposition 33 an (Schritt 46).
7. Sobald der Schwenkarm 22 in die erste Schwenkposition 33 zurückgekehrt ist, fährt der Teleskoparm 23 aus dem Schwenkarm 22 gemäß Schritt 48 aus. Dadurch gibt die Hebevorrichtung 7 die Heckklappe 16 des LKWs A wieder frei. Der Teleskoparm 23 kehrt dann wieder in die ausgefahrene Position 24 (siehe Fig. 5) zurück. Das Ausfahren des Teleskoparms 23 kann mittels der Stopptaste 39 unterbrochen werden oder automatisch geschehen, wenn dieser die ausgefahrene Position 24 erreicht.
8. Die Hebevorrichtung 7 befindet sich jetzt wieder in ihrer Ausgangsstellung 40.
9. Die Halte- und Wendepunkte, die während des Bewegungsablaufs der Hebevorrichtung 7 durchlaufen werden, können von der Steuervorrichtung 45 erlernt und bei Bedarf aufgerufen werden. Nachdem der Bewegungsablauf der Hebevorrichtung 7 durchgeführt ist, kann er von der Steuervorrichtung 45 des Straßenfertigers oder Beschickers abgespeichert werden. Dies kann vorzugsweise mittels Tastendrucks, insbesondere durch die Starttaste 38 und/oder die Stopptaste 39 geschehen. Alternativ kann der Bewegungsablauf auch durch Betätigen einer auf dem Bedienstand 8 vorgesehenen Speichertaste abgespeichert werden. Weiter alternativ kann die Abspeicherung automatisch geschehen, wobei vorzugsweise ein Speicher- und/oder Aufrufvorgang durch das Andocken des LKWs am Straßenfertiger oder Beschicker ausgelöst wird.

Der oben dargestellte Betriebsablauf der Hebevorrichtung kann alternativ dazu auch vollautomatisch stattfinden, insbesondere in funktionaler Kopplung mit der Schubvorrichtung 11 des Straßenfertigers 2 oder des Beschickers 13. Diesbezüglich können der Linearantrieb 28 sowie der Schwenkantrieb 32 über eine Signalleitung zwischen der Hebevorrichtung 7 und der Schubvorrichtung 11 angesteuert werden. Ein zusätzliches Einwirken eines Bedieners mittels Tastendrucks ist dann nicht mehr notwendig. Insbesondere kann der automatische Betrieb der Hebevorrichtung 7 den oben unter Punkt 9 dargestellten Speichervorgang des Bewegungsablaufs durchlaufen.

In den hier beschriebenen Ausführungsformen wurde die Hebevorrichtung 7 als eigenständige Einheit beschrieben, die lösbar am Gutbunker 5 befestigbar ist. Allerdings wäre es auch möglich, die Hebevorrichtung 7 integriert mit dem Gutbunker, insbesondere in dessen Seitenwand 6 integriert auszubilden. Vorstellbar wäre es beispielsweise, dass die komplette Lagereinheit 21 innerhalb der Seitenwand 6 angeordnet ist, wobei die Seitenwand 6 dafür einen geeigneten Hohlraum zur Aufnahme ausbildet. Bei einer solchen Lösung würde dann im Gutbunker 5 nur noch der Schwenkarm 22 und der daran gekoppelte Teleskoparm 23 zu sehen sein.

## Patentansprüche

1. Baumaschine (1) mit einem Gutbunker (5) zur Aufnahme von zu verbauendem Einbaumaterial (M), wobei die Baumaschine (1) ein Straßenfertiger (2) oder ein Beschicker (13) ist, **dadurch gekennzeichnet, dass** der Gutbunker (5) mindestens eine Hebevorrichtung (7) umfasst, die mit einer beweglichen Heckklappe (16) eines den Gutbunker (5) mit dem Einbaumaterial (M) beliefernden LKWs (A) in einen lösbaren Eingriff bringbar ist und die dazu konfiguriert ist, die bewegliche Heckklappe (16) des LKWs (A) zwischen einer ersten Position (35) und einer zweiten Position (36) zu verlagern.

2. Baumaschine nach Anspruch 1, **dadurch gekennzeichnet, dass** die Hebevorrichtung (7) einen Linearantrieb (28) umfasst, der dazu ausgebildet ist, die Hebevorrichtung (7) mit der beweglichen Heckklappe (16) des LKWs (A) in Eingriff zu bringen sowie die Hebevorrichtung (7) von der beweglichen Heckklappe (16) zu lösen.

3. Baumaschine nach einem der vorangehenden Ansprüche, **dadurch gekennzeichnet, dass** die Hebevorrichtung (7) einen Schwenkantrieb (32) umfasst, der dazu ausgebildet ist, die bewegliche Heckklappe (16) des LKWs (A) zwischen der ersten Position (35) und der zweiten Position (36) zu schwenken.

4. Baumaschine nach einem der vorangehenden Ansprüche, **dadurch gekennzeichnet, dass** die Hebevorrichtung (7) zum Ergreifen und/oder zum Verlagern der Heckklappe (16) des LKWs (A) elektrisch, hydraulisch, pneumatisch und/oder mechanisch betreibbar ist.

5. Baumaschine nach einem der vorangehenden Ansprüche, **dadurch gekennzeichnet, dass** die Hebevorrichtung (7) automatisch und/oder manuell ansteuerbar ist, wobei insbesondere ein erlernter, zuvor abgespeicherter Bewegungsablauf für die Hebevorrichtung (7) aufrufbar ist.

6. Baumaschine nach einem der vorangehenden Ansprüche, **dadurch gekennzeichnet, dass** die Hebevorrichtung (7) eine Lagereinheit (21), einen daran rotierbar befestigten Schwenkarm (22) und einen Teleskoparm (23) umfasst, welcher am Schwenkarm (22) zwischen einer aus- und einer eingefahrenen Position (24, 25) verstellbar befestigt ist.

7. Baumaschine nach Anspruch 6, **dadurch gekennzeichnet, dass** der Teleskoparm (23) an seinem ausfahrbaren Ende ein Halteelement (26) zum Ankoppeln an der Heckklappe (16) umfasst.

8. Baumaschine nach einem der vorangehenden Ansprüche, **dadurch gekennzeichnet, dass** die Hebevorrichtung (7) an einer oberen Kante (12) einer Seitenwand (6) des Gutbunkers (5) befestigt ist.

9. Baumaschine nach einem der vorangehenden Ansprüche, **dadurch gekennzeichnet, dass** an beiden Seitenwänden (6) des Gutbunkers (5) jeweils eine Hebevorrichtung (7) befestigt ist.

10. Baumaschine nach einem der vorangehenden Ansprüche, **dadurch gekennzeichnet, dass** die Hebevorrichtung (7) lösbar am Gutbunker (5) befestigt ist.

11. Baumaschine nach einem der vorangehenden Ansprüche, **dadurch gekennzeichnet, dass** die Hebevorrichtung (7) dazu konfiguriert ist, die Heckklappe (16) außerhalb eines Ladebereichs (19) des Gutbunkers zu halten, wenn die Heckklappe (16) in der zweiten Position (36) ist.

12. Verfahren zum Verstellen einer beweglichen Heckklappe (16) eines LKWs (A), der zur Übergabe von Einbaumaterial (M) an einem Gutbunker (5) eines Straßenfertigers (2) oder Beschickers (13) positioniert ist, wobei eine Hebevorrichtung (7), welche am Gutbunker (5) des Straßenfertigers (2) oder Beschickers (13) vorgesehen ist, an der Heckklappe (16) des LKWs (A) andockt, wenn sich die Heckklappe (16) in einer ersten Position (35) befindet, wobei die Hebevorrichtung (7) die Heckklappe (16) aus der ersten Position (35) in eine zweite Position (36) bewegt, in welcher die Heckklappe (16) zumindest teilweise aus einem Ladebereich (19) des Gutbunkers (5) heraus bewegt ist, und wobei die Hebevorrichtung (7) die Heckklappe (16) temporär in der zweiten Position (36) hält.

13. Verfahren nach Anspruch 12, **dadurch gekennzeichnet, dass** die Hebevorrichtung (7) die Heckklappe (16) von der zweiten Position (36) zurück in die erste Position (35) bringt.

14. Verfahren nach Anspruch 12 oder 13, **dadurch gekennzeichnet, dass** die Hebevorrichtung (7) zum Andocken an der Heckklappe (16) des LKWs (A) mittels eines Linearantriebs (28) verstellt wird.

15. Verfahren nach einem der Ansprüche 12 bis 14, **dadurch gekennzeichnet, dass** die Hebevorrichtung (7) zum Bewegen der Heckklappe (16) zwischen der ersten und der zweiten Position (35, 36) mittels eines Schwenkantriebs (32) verstellt wird.

## Claims

1. A building machine (1) comprising a material bunker (5) for accommodating therein pavement material (M) to be laid, the building machine (1) being a road finisher (2) or a charger (13), **characterized in that** the material bunker (5) comprises at least one lifting device (7), which is adapted to enter into releasable engagement with a movable tailgate (16) of a truck (A) supplying the material bunker (5) with the pavement material (M) and which is configured for displacing the movable tailgate (16) of the truck (A) between a first position (35) and a second position (36).

2. The building machine according to claim 1, **characterized in that** the lifting device (7) comprises a linear drive (28) configured for bringing the lifting device (7) into engagement with the movable tailgate (16) of the truck (A) as well as for releasing the lifting device (7) from the movable tailgate (16).

3. The building machine according to one of the preceding claims, **characterized in that** the lifting device (7) comprises a pivot drive (32) configured for pivoting the movable tailgate (16) of the truck (A) between the first position (35) and the second position (36).

4. The building machine according to one of the preceding claims, **characterized in that** the lifting device (7) is adapted to be operated electrically, hydraulically, pneumatically and/or mechanically for taking hold of and/or displacing the tailgate (16) of the truck (A).

5. The building machine according to one of the preceding claims, **characterized in that** the lifting device (7) is controllable automatically and/or manually, and that in particular a learned, previously stored sequence of motions for the lifting device (7) can be retrieved.

6. The building machine according to one of the preceding claims, **characterized in that** the lifting device (7) comprises a bearing unit (21), a pivot arm (22) rotatably secured thereto and a telescopic arm (23), which is secured to the pivot arm (22) such that it is displaceable between an extended and a retracted position (24, 25).

7. The building machine according to claim 6, **characterized in that** the telescopic arm (23) comprises at its extendable end a holding element (26) for coupling to the tailgate (16).

8. The building machine according to one of the preceding claims, **characterized in that** the lifting device (7) is secured in position on an upper edge (12) of the side wall (6) of the material bunker (5).

9. The building machine according to one of the preceding claims, **characterized in that** each of the two side walls (6) of the material bunker (5) has secured thereto a respective lifting device (7).

10. The building machine according to one of the preceding claims, **characterized in that** the lifting device (7) is releasably secured to the material bunker (5).

11. The building machine according to one of the preceding claims, **characterized in that** the lifting device (7) is configured for holding the tailgate (16) outside a charging area (19) of the material bunker, when the tailgate (16) occupies the second position (36).

12. A method of shifting a movable tailgate (16) of a truck (A) positioned on a material bunker (5) of a road finisher (2) or of a charger (13) for the purpose of transferring pavement material (M), wherein a lifting device (7), which is provided on the material bunker (5) of the road finisher (2) or of the charger (13), docks onto the tailgate (16) of the truck (A) when said tailgate (16) occupies a first position (35), the lifting device (7) moving the tailgate (16) from said first position (35) to a second position (36), at which the tailgate (16) has, at least partially, been moved out of a charging area (19) of the material bunker (5), the tailgate (16) being held by the lifting device (7) at said second position (36) at least temporarily.

13. The method according to claim 12, **characterized in that** the lifting device (7) moves the tailgate (16) from the second position (36) back to the first position (35).

14. The method according to claim 12 or 13, **characterized in that** the lifting device (7) is displaced by means of a linear drive (28) for docking onto the tailgate (16) of the truck (A).

15. The method according to one of the claims 12 to 14, **characterized in that** the lifting device (7) is displaced by means of a pivot drive (32) for moving the tailgate (16) between the first and the second position (35, 36).

## Revendications

1. Engin de travaux publics (1) comprenant une trémie à matériau (5) destinée à recevoir du matériau de revêtement de chaussée (M) à poser au sol, l'engin de travaux publics (1) étant un finisseur de route (2) ou un alimentateur (13), **caractérisé en ce que** la trémie à matériau (5) comporte au moins un dispositif de soulèvement (7), qui peut être amené en prise amovible avec un hayon arrière mobile (16) d'un camion (A) alimentant la trémie à matériau (5) avec le matériau de revêtement de chaussée (M), et qui est configuré pour déplacer le hayon arrière mobile (16) du camion (A) entre une première position (35) et une deuxième position (36).

2. Engin de travaux publics selon la revendication 1, **caractérisé en ce que** le dispositif de soulèvement (7) comprend un entraînement linéaire (28), qui est conçu pour amener le dispositif de soulèvement (7) en prise avec le hayon arrière mobile (16) du camion (A), ainsi que pour désolidariser le dispositif de soulèvement (7) du hayon arrière mobile (16).

3. Engin de travaux publics selon l'une des revendications précédentes, **caractérisé en ce que** le dispositif de soulèvement (7) comprend un entraînement de pivotement (32), qui est conçu pour faire pivoter le hayon arrière mobile (16) du camion (A) entre la première position (35) et la deuxième position (36).

4. Engin de travaux publics selon l'une des revendications précédentes, **caractérisé en ce que** le dispositif de soulèvement (7) peut fonctionner par voie électrique, hydraulique, pneumatique et/ou mécanique, pour assurer la saisie et/ou le déplacement du hayon arrière (16) du camion (A).

5. Engin de travaux publics selon l'une des revendications précédentes, **caractérisé en ce que** le dispositif de soulèvement (7) peut être commandé de manière automatique et/ou manuelle, et **en ce qu'**il est notamment possible de procéder à l'appel d'une séquence de mouvement pour le dispositif de soulèvement (7), obtenue par apprentissage et mémorisée au préalable.

6. Engin de travaux publics selon l'une des revendications précédentes, **caractérisé en ce que** le dispositif de soulèvement (7) comprend une unité de palier (21), un bras pivotant (22) qui y est fixé en rotation, et un bras télescopique (23), qui est fixé au bras pivotant (22) en étant réglable entre une position rentrée et une position sortie (24, 25).

7. Engin de travaux publics selon la revendication 6, **caractérisé en ce que** le bras télescopique (23) comporte, à son extrémité extractible, un élément de maintien (26) destiné à être couplé au hayon arrière (16).

8. Engin de travaux publics selon l'une des revendications précédentes, **caractérisé en ce que** le dispositif de soulèvement (7) est fixé au niveau d'un bord supérieur (12) d'une paroi latérale (6) de la trémie de matériau (5).

9. Engin de travaux publics selon l'une des revendications précédentes, **caractérisé en ce que** sur les deux parois latérales (6) de la trémie à matériau (5) est fixé respectivement un dispositif de soulèvement (7).

10. Engin de travaux publics selon l'une des revendications précédentes, **caractérisé en ce que** le dispositif de soulèvement (7) est fixé de manière amovible sur la trémie à matériau (5).

11. Engin de travaux publics selon l'une des revendications précédentes, **caractérisé en ce que** le dispositif de soulèvement (7) est configuré pour maintenir le hayon arrière (16) en-dehors d'une zone de chargement (19) de la trémie à matériau, lorsque le hayon arrière (16) est dans la deuxième position (36).

12. Procédé pour déplacer un hayon arrière mobile (16) d'un camion (A), qui est positionné pour transférer du matériau de revêtement de chaussée (M) à une trémie de matériau (5) d'un finisseur de route (2) ou d'un alimentateur (13), procédé
d'après lequel un dispositif de soulèvement (7), qui est prévu sur la trémie de matériau (5) du finisseur de route (2) ou de l'alimentateur (13), vient accoster le hayon arrière (16) du camion (A), lorsque le hayon arrière (16) se trouve dans une première position (35), d'après lequel le dispositif de soulèvement (7) déplace le hayon arrière (16) de la première position (35) à une deuxième position (36) dans laquelle le hayon arrière (16) est déplacé au moins partiellement hors d'une zone de chargement (19) de la trémie de matériau (5), et d'après lequel le dispositif de soulèvement (7) maintient temporairement le hayon arrière (16) dans la deuxième position (36).

13. Procédé selon la revendication 12, **caractérisé en ce que** le dispositif de soulèvement (7) ramène le hayon arrière (16) de la deuxième position (36) à la première position (35).

14. Procédé selon la revendication 12 ou la revendication 13, **caractérisé en ce que** le dispositif de soulèvement (7), pour accoster le hayon arrière (16) du camion (A), est déplacé au moyen d'un entraînement linéaire (28).

15. Procédé selon l'une des revendications 12 à 14, **caractérisé en ce que** le dispositif de soulèvement (7), pour assurer le déplacement du hayon arrière (16) entre la première et la deuxième position (35, 36), est déplacé au moyen d'un entraînement de pivotement (32).
